# EUROPEAN PATENT SPECIFICATION

(11) **EP 4 296 838 B1**
(45) Date of publication and mention of the grant of the patent: **08.04.2026**
(21) Application number: 23180680.3
(22) Date of filing: 21.06.2023
(51) Int. Cl.: G06F 3/023, G06F 3/038, G06F 3/04842, G06V 30/146, H04N 1/00

(54) **SYSTEM AND METHOD FOR OCR-BASED TEXT CONVERSION AND COPYING MECHANISM FOR AGENTLESS HARDWARE-BASED KVM**
SYSTEM UND VERFAHREN FÜR OCR-BASIERTEN TEXTKONVERTIERUNGS- UND KOPIERMECHANISMUS FÜR EIN AGENTLOSES HARDWARE-BASIERTES KVM
SYSTÈME ET PROCÉDÉ POUR MÉCANISME DE CONVERSION ET DE COPIE DE TEXTE À BASE D'OCR POUR UN KVM MATÉRIEL SANS AGENT

(30) Priority: 23.06.2022 US 202263354850 P; 09.05.2023 US 202318314489
(43) Date of publication of application: 27.12.2023
(73) Proprietor: Vertiv Corporation, Westerville, OH 43082 (US)
(72) Inventor: WEEDEMANN, Joerg, Santa Clara (US); AMIRTHASAMY, Joseph, Weston (US)
(74) Representative: Beal, James Michael

(56) References cited:
- US-B1- 6 178 270
- US-B2- 11 017 254

## Description

### CROSS-REFERENCE TO RELATED APPLICATIONS

This application claims the benefit of priority under 35 U.S.C. § 119(e) to U.S. Provisional Application No. 63/354,850, filed on June 23, 2022.

### FIELD

The present disclosure relates to KVM systems and methods, and more particularly to a KVM system and method which enables a user to select text or alphanumeric information appearing in a video frame on a display associated with a KVM appliance, to convert the selected portion of information appearing in the video frame into a text output, and to copy the text output into other applications, documents or web pages.

### BACKGROUND

The statements in this section merely provide background information related to the present disclosure and may not constitute prior art.

The traditional hardware-based KVM (keyboard, video and mouse) redirection over IP method relies on capturing a video output signal from a target system, usually a target computer or server, repackaging and compressing the video output signal, and sending it back across an IP network to a client computer to display the screen content on the client computer's display screen. The client computer may be a desktop, laptop, tablet, smartphone, or any other form of personal computing device having a display screen or in communication with a display device. This traditional hardware-based KVM system does not make use of any software, drivers or agents installed and running on the remote target computer or server. The transmitted and displayed data which is displayed on the client computer's display screen is of a graphical nature, meaning it is a matrix of pixels that builds the textual and non-textual screen content, similar to how pixels are used to build a photo.

Such traditional hardware-based KVM solutions are also referred to "agentless" KVM solutions and are usually preferred by IT administration professionals. Agentless KVM solutions are therefore solutions where no special software is installed on a target computer or server being remotely accessed by a client computer (i.e., a user using his/her personal computing device).

Agentless KVM solutions, while commonly employed at the present time, have a significant limitation. This is the inability of the client computer to select and extract text content that is visible in the video image frame being displayed on the user's display screen, and to further use and process it as text, for example, by copying it into other documents or onto the clipboard of the client's personal computing device. A typical example where such functionality is desired is when the remote computer display screen displays, for example, a textual or alphanumeric error number, a log number, a serial number, a software version number or BIOS version number, a software license number, one or more phone numbers, or possibly a hyperlink that the operator of the KVM solution would like to extract and use for further processing, possibly with one or more other applications.

As a result, the remote computer or server is not able to use and process such text in the video image frame for further consumption, or to pass the text into other applications. In order for the user to be able to use text being displayed in the video image frame on his/her personal computing device, the user typically has to resort to using an agent-based KVM solution, for example VNC (Virtual Network Computing), RDP (Remote Desktop Protocol) or another remote desktop solution. Such agent-based solutions, however, usually require an installation of software onto the target computer or server, which is generally considered undesirable from an IT management standpoint due to security, complexity, and other issues.

Accordingly, a need exists to enable users to extract and use important and/or helpful text or alphanumeric information being presented in a video frame on a display of a user's device which is running an agentless KVM application, to enhance user productivity when accessing a target computer or server during a KVM session.

US11017254B2 describes an image data retrieving method and an image data retrieving device. The image data retrieving method includes: receiving an image including a plurality of data from a communication interface; obtaining a plurality of regions of interest from the image, wherein each of the regions of interest is a data image including at least one of the data; dividing the regions of interest into a plurality of groups, wherein at least one of the data included in the regions of interest of each of the groups has a same type; combining the regions of interest of each of the groups into a to-be-recognized image; and performing an optical character recognition to the to-be-recognized image corresponding to each of the groups respectively to obtain the data corresponding to the regions of interest of each of the groups. US6178270B1 describes a method carried out in an image processing system in which images of documents are captured by an image capture device, such as a video camera, comprising: (a) displaying successive images captured by the video camera, each image being defined by grayscale image data and containing text matter, (b) receiving a first user input (mouse button click) defining the start of a selection and a first position within the displayed image, (c) in response to the first user input, freezing the displayed image, (d) determining the skew angle of text matter with respect to the field of view of the video camera, (e) receiving at least one further user input (further button click; drag of cursor), including a final user input (mouse button release), defining the end of a selection, and for the or each further user input, (f) determining, using the skew angle determined in step (d), the position, shape and dimensions of a selection element in dependence upon at least the first position, and (g) displaying the selection element superimposed on the frozen displayed image. The selection element may be a rectangle, or a selection block highlighting one or more words of text.

### SUMMARY

An invention is set out in the independent claims.

This section provides a general summary of the disclosure and is not a comprehensive disclosure of its full scope or all of its features.

In one aspect the present disclosure relates to a method for selecting and copying one or more characters of at least one of text or alphanumeric information appearing within a video image frame being displayed on a display of a client computing device, during a keyboard, video and mouse (KVM) session in which the client computing device is being used. The method may comprise accessing a KVM appliance using a client computing device being operated by a user, wherein the client computing device is running a KVM application, and using the KVM application to control the KVM appliance to communicate with a target computer. The method may further include using the KVM appliance to supply a video frame received from the target computer to a display operatively associated with the client computing device. The video frame contains pixels making up the video frame, with the pixels in the video frame forming at least one text or alphanumeric character. The method may further include receiving an input from a user controllable control component of the client computing device. The input defines a portion of the video frame selected by the user which includes the at least one text or alphanumeric character to be converted into a text output. The method may further include using an optical character recognition (OCR) software application to convert the at least one text or alphanumeric character into the text output, and using the client computing device to copy the text output for subsequent use by the user.

In another aspect the present disclosure relates to a method for selecting and copying one or more characters of at least one of text or alphanumeric information appearing within a video image frame being displayed on a display of a client computing device, during a keyboard, video and mouse (KVM) session in which the client computing device is being used. The method may comprise accessing a KVM appliance using a client computing device being operated by a user, wherein the client computing device is running a KVM application. The method may further include using the KVM application to control the KVM appliance to communicate with a target computer, and using the KVM appliance to supply a video frame received from the target computer to a display operatively associated with the client computing device. The video frame contains pixels making up the video frame, with the pixels in the video frame forming at least one text or alphanumeric character. The method may further include receiving an input from a user controllable control component operatively associated with the client computing device. The input defines a portion of the video frame selected by the user which includes the at least one text or alphanumeric character to be converted into ASCII text output and copied. The method may further include using an optical character recognition (OCR) software application stored in a memory of the client computing device and running on the client computing device to recognize and convert the selected at least one text or alphanumeric character into a text output, receiving a COPY command created using the client computing device, and in response to receiving the COPY command, copying the text output for subsequent use by the user.

In still another aspect the present disclosure relates toa method for selecting and copying one or more characters of at least one of text or alphanumeric information appearing within a video image frame being displayed on a display of a client computing device, during a keyboard, video and mouse (KVM) session in which the client computing device is being used. The method may comprise accessing a KVM appliance using a client computing device being operated by a user, wherein the client computing device is running a KVM application. The method may also include using the KVM application to control the KVM appliance to communicate with a target computer, and using the KVM appliance to supply a video frame received from the target computer to a display operatively associated with the client computing device. The video frame contains pixels making up the video frame, with the pixels in the video frame forming at least one text or alphanumeric character. The method may also include receiving an input from a user controllable control component operatively associated with the client computing device. The input highlights a portion of the video frame selected by the user which includes the at least one text or alphanumeric character to be converted into ASCII text output and copied. The method may further include using an optical character recognition (OCR) software application stored in a memory of the client computing device and running on the client computing device to recognize and convert the selected at least one text or alphanumeric character into an ASCII text output. The method may also include using a clipboard of the client computing device to receive the ASCII text output in response to receiving a COPY command input by the user of the client computing device, receiving a PASTE command initiated by the user from the user controllable mouse-like component, and pasting the ASCII text output into at least one of a selected application, a selected document or a selected web page.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations or embodiments and are not intended to limit the scope of the present disclosure.

Corresponding reference numerals indicate corresponding parts throughout the several views of the drawings, wherein:

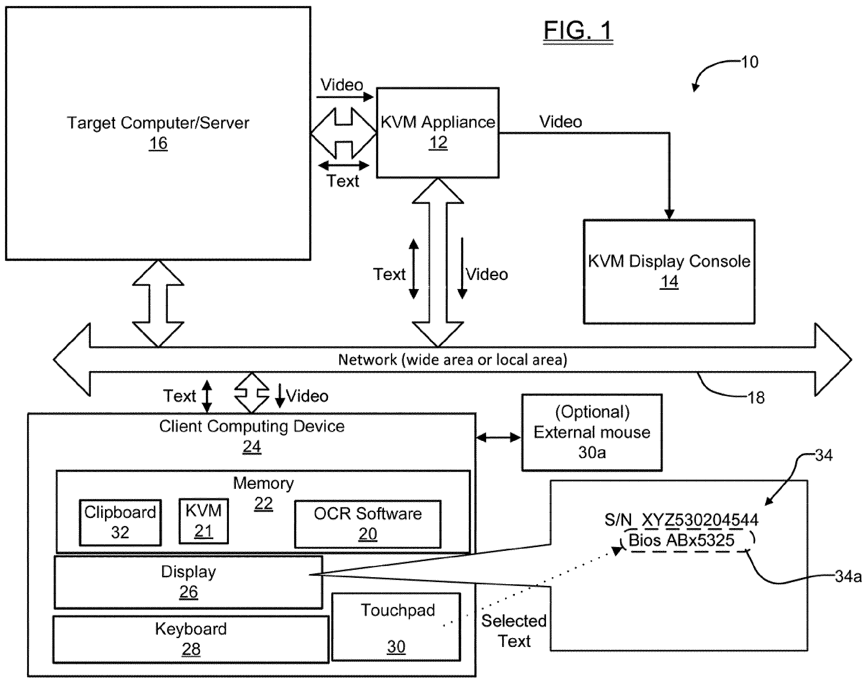

Figure 1 is a high level block diagram of one embodiment of an agentless KVM system in accordance with the present disclosure; and

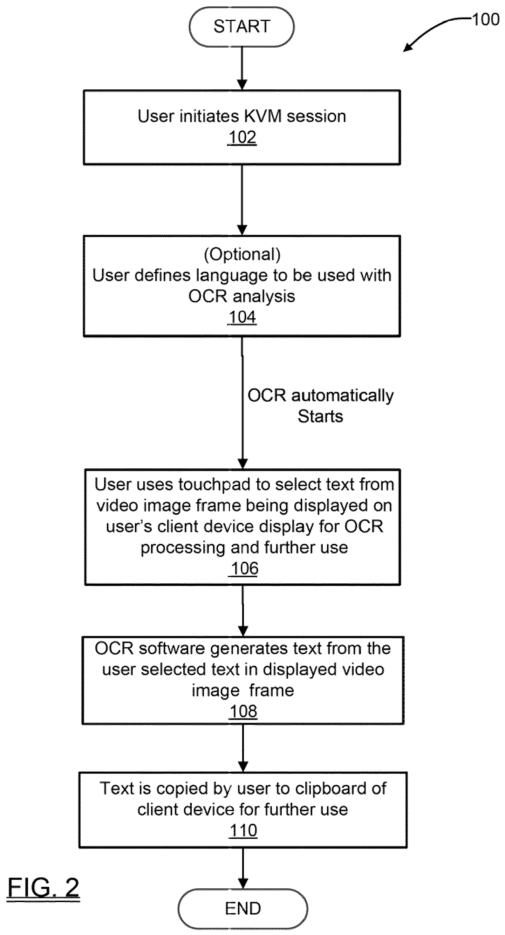

Figure 2 is a high level flowchart of operations that may be performed by the system of Figure 1 to enable a user to select and capture one or more portions of video appearing on a display of the user's personal electronic device, where the video includes text or alphanumeric content, to convert the selected video content using an OCR application to create ASCII text or alphanumeric information, and to copy the ASCII text or alphanumeric information onto a clipboard of the user's personal electronic device for further use.

### DETAILED DESCRIPTION

Example embodiments will now be described more fully with reference to the accompanying drawings.

Referring to Figure 1, one embodiment of a KVM system 10 is shown in accordance with the present disclosure. The system 10 in this example includes a KVM appliance 12 which is coupled to a KVM display console 14. The KVM appliance 12 is in bi-directional communication with a target computer or target server 16 (hereinafter simply "target computer" 16). The KVM appliance 12 communicates text commands or requests to the target computer 16 typically via a USB connection (not shown), and receives video from the target computer 16 via a video interface connection (not shown). The KVM appliance 12 displays information on the KVM display console 14 which may include text, alphanumeric information and/or non-textual graphic information. Often such information includes, without limitation, information pertaining to software version numbers, device and/or software serial numbers or product numbers/names, operating system BIOS numbers, log numbers, error log numbers, software license numbers, uniform resource locator strings (URLs), multi-factor authentication character strings, intellectual property information such as U.S. trademark or patent numbers, etc.

The KVM appliance 12 is typically in communication with a network 18, which may be a local area network or a wide area network. For simplicity, this connect will be referred to throughout the following discussion as "network 18". It will be appreciated that the KVM appliance 12 may communicate with the target computer 16 through a separate local area network (not shown), rather than a direct hard-wired connection as shown in Figure 1, and the present disclosure is not limited to any specific connection configuration between the KVM appliance 12 and the target computer 16, or any specific type of connection (network or otherwise) between the KVM appliance 12 and other remote devices.

The system 10 may further include an OCR software application 20 and a KVM software application 21 both loaded and running within a memory 22 (e.g., RAM, ROM, etc.) of a client computing device 24. The client computing device 24 may be a user's laptop, computing tablet, desktop computer, smartphone, or any other personal electronic device capable of running the KVM software application 21. The client computing device 24 may have a built in display 26 (e.g., LCD, LED, etc.) or optionally may be using an external display (not shown). The client computing device 24 typically also includes some form of user controllable control component, for example a graphical user input (GUI) device such as a keyboard 28 and/or touchpad 30 or external mouse 30a physically connected to the client computing device 24 such as via a USB connection. Optionally, a touch display feature may be used in place of the touchpad 30 or external mouse 30a to enable the user to select a portion of information appearing on the display 26 by using a finger being moved on the display 26. The keyboard 28 may be a physical keyboard, as depicted in Figure 1, or optionally the keyboard may also be a virtual keyboard able to be displayed on the display 26. For convenience, in the following discussion it will be assumed that the client computing device 24 incorporates a touchpad 30 rather than an external mouse 30a, with the understanding that the system 10 is not limited to only one form of GUI input device or only one form (i.e., internal or external) of display 26.

The client computing device 24 also may include an internal clipboard 32 onto which information selected using the touchpad 30 can be copied and pasted into an application, document or web page that the user is accessing (or will access in the future). The client computing device 24 communicates text (e.g., ASCII text) to, and receives text (e.g., ASCII text) back from, the KVM appliance 12 via the network 18. The client computing device 24 also receives a video signal back from the KVM appliance 12 over the network 18 which is displayed as a video frame on the display 26.

Figure 1 also illustrates the display 26 displaying a video frame having video information 34 which has been received from the KVM appliance 12. The video information 34 is made up of pixels forming text or alphanumeric characters and/or symbols, as well as possibly other graphics, as is well understood with present day display systems. The text or alphanumeric information formed by the video information 34 may be information which the user wishes to use for some other purpose, such as by copying it onto the clipboard 32 of the client computing device 24 for subsequent use in an application or document, or possibly on a web page being accessed. However, past agentless KVM systems did not provide this capability electronically. Thus the user has, up until now, been limited to physically writing down the text or alphanumeric information on a separate piece of paper or recording it on some other device manually, and then re-entering the copied information manually via the keyboard 28. As will be appreciated, many types of information such as serial numbers, BIOS information and/or web links may be quite lengthy and may include a string of characters including letters, numbers and other symbols such as back slashes, forward slashes, asterisks, etc. As such, the information that the user wishes to copy for subsequent use, because of length and/or complexity and/and diversity of the characters present, can be highly susceptible to manual transcription errors when copying such information by hand.

The system 10 provides a highly valuable feature of enabling the user to use the touchpad 30 to highlight a user selected portion of the video frame being displayed on the display 26, to OCR convert the text or alphanumeric information within the selected portion of the video frame to usable text information, and to copy the text information onto the clipboard 32 for subsequent use in an application, document or web page that the user accesses. This is accomplished by the user accessing the touchpad 30 and using one or more fingers to highlight just the portion of the information 34 within the video frame that the user wishes to convert to ASCII text, which in this example is portion 34a denoted by a dashed line. Once highlighted, the user may also select, using the touchpad 30 or a separate control on the client computing device 24, to "COPY" the selected portion of video onto the clipboard 32. The execution of the COPY command by the user invokes use of the OCR software application 20. The OCR software application 20 may be started upon the KVM application detecting that the user has selected (i.e., highlighted) a certain portion of video on the display 26, or possibly even once the COPY command has been received, and any one of these implementations may be used with the system 10.

At this point the user will have the selected information 34a OCR converted and copied onto the clipboard 32. It will then be possible to copy the selected information 34a automatically, electronically, into a selected document or into a selected application which the user subsequently opens, or into a web page that the user has accessed or is about to access, simply by using the "PASTE" command which is common with many applications. This completely eliminates the risk of any error by the user in copying the selected information 34a. Importantly, this also provides the user with a means to select information appearing in a video frame on the display 26 which is not known to the user beforehand (e.g., a BIOS version number, serial number, etc.). While some preexisting systems have provided the capability to OCR convert certain information appearing on a display, such systems have required that the specific information be programmed or otherwise input into the OCR application beforehand. The present system 10 and method of operation are not limited to the user knowing the exact information to be OCR converted beforehand; essentially any text or alphanumeric information which appears on the display 26 can be selected by the user for OCR conversion and then copied into a different application or a document for subsequent use.

It is also important to note that the process by which the user uses the system 10 is intuitive and does not necessitate any complex procedures for the user to carry out when selecting and OCR converting select portions of text or alphanumeric information appearing on the display 26, and then copying the OCR converted text into a different application. As such, the system 10 enables text and alphanumeric information appearing on the display 26 to be OCR converted into ASCII text output and used by the user in other applications in a virtually seamless manner. Moreover, this capability exists at any time while the user is using the system 10, and is therefore not limited to capturing text or alphanumeric information during only bootup or shut down operations.

Referring now to Figure 2, a high level flowchart 100 is shown of various operations that may be performed by the system 10 in enabling a user to select, OCR convert, and copy select portions of text or alphanumeric information appearing in a video frame on the display 26. At operation 102 the user may initiate a KVM session using the client computing device 24, which may involve starting the KVM application 21 and initiating a connection with the KVM appliance 12. At operation 104, which is shown as being optional, but which may of course be a mandatory operation as well, the user defines a language to be used with the OCR operation. This operation may also be enabled in a "Preferences" section of the KVM application so that a default language is used if the user is not required to make a specific selection. At operation 106 the user may use the touchpad 30 (or the externally connected mouse 30a) to highlight a selected text item, portion or string being displayed in a video frame on the display 26 of the client computing device 24, for subsequent OCR processing and further use. At operation 108 the OCR software 20 generates text (i.e., ASCII text output) from the user selected text or alphanumeric information in the video frame being displayed on the display 26. At operation 110 the user may use the touchpad 30 (or connected external mouse 30a) to "COPY" the just-created ASCII text to the clipboard 32 for subsequent use in a different application, or in a web page, or in any document where the user wishes to insert the text. The "PASTE" command may then be used to paste the copied ASCII text into the application, document or web page.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

## Claims

1. A method for selecting and copying one or more characters of at least one of text or alphanumeric information appearing within a video image frame being displayed on a display (26) of a client computing device (24), during a keyboard, video and mouse, KVM, session in which the client computing device is being used, the method comprising:
accessing a KVM appliance (12) using a client computing device (24) being operated by a user, wherein the client computing device is running a KVM application (21) to carry out the KVM session;
using the KVM application to control the KVM appliance to communicate with a target computer (16);
using the KVM appliance to supply a video frame received from the target computer to a display (26) operatively associated with the client computing device, the video frame containing pixels making up the video frame, the pixels in the video frame forming at least one text or alphanumeric character;
receiving an input from a user controllable control component of the client computing device, the input defining a portion of the video frame selected by the user which includes the at least one text or alphanumeric character to be converted into a text output;
using an optical character recognition, OCR, software application (20) to convert the at least one text or alphanumeric character into the text output, wherein execution of a COPY command by the user invokes use of the OCR software application; and
using the client computing device to copy the text output for subsequent use by the user.

2. The method of claim 1, wherein the OCR software application is running on the client computing device.

3. The method of claim 1, wherein the receiving an input from a user controllable control component comprises receiving an input from a user controlled touchpad (30) of the client computing device, wherein the touchpad is configured to enable the user to highlight a portion of the video frame in which the at least one text or alphanumeric character appears.

4. The method of claim 1, wherein the receiving an input from a user controllable control component comprises receiving an input from an external mouse (30a) coupled to the client computing device, wherein the external mouse is configured to enable the user to highlight a portion of the video frame in which the at least one text or alphanumeric character appears.

5. The method of claim 1, wherein the text output comprises an ASCII text output.

6. The method of claim 1, wherein the user controllable control component is configured to enable the user to copy the text output to a clipboard (32) of an application running on the client computing device after conversion by the OCR software application.

7. The method of claim 6, wherein the using the user controllable control component comprises using a touchpad (30) operatively associated with the client computing device.

8. The method of claim 6, wherein the using the user controllable control component comprises using an external mouse (30a) connected to the client computing device.

9. The method of claim 1, wherein the accessing a KVM appliance using a client computing device comprises accessing the KVM appliance using one of:
a laptop;
a desktop computer;
a computing tablet; or
a smartphone.

10. A system (10) for selecting one or more characters of at least one of text or alphanumeric character appearing in a video frame received during a keyboard, video and mouse, KVM, session, the system comprising:
a computing device (24) for accessing and communicating with a remotely located KVM appliance (12) being used to carry out the KVM session;
a display (26) operably associated with the computing device;
a memory (22) operably associated with the computing device, the memory configured to:
run a KVM application (21) to help carry out the KVM session, to enable communication with a remotely located target computer (16) in communication with the KVM appliance;
run an optical character recognition, OCR, program (20) configured to recognize the at least one of text or alphanumeric character in the video frame received from the KVM appliance;
the computing device configured to receive and display the video frame on the display, generated by the target computer and passed to the computing device by the KVM appliance, the video frame containing pixels making up the video frame, and the pixels in the video frame forming the at least one text or alphanumeric character;
a user controllable input operably associated with the computing device and configured to enable a user to define a selected portion of the video frame which includes the at least one text or alphanumeric character; and
the computing device further configured to use the OCR program to convert the at least one text or alphanumeric character into the text output, for further subsequent use by the user, wherein execution of a COPY command by the user invokes use of the OCR program.

## Patentansprüche

1. Verfahren zum Auswählen und Kopieren eines oder mehrerer Zeichen(s) mindestens eines von einem Text oder alphanumerischen Informationen, der/die innerhalb eines Videobild-Frames angezeigt wird/werden, das auf einer Anzeige (26) einer Client-Rechenvorrichtung (24) während einer Tastatur-, Video- und Maussitzung, KVM-Sitzung, in der die Client-Rechenvorrichtung verwendet wird, angezeigt wird, wobei das Verfahren umfasst:
Zugreifen auf ein KVM-Gerät (12) unter Verwendung einer Client-Rechenvorrichtung (24), die durch einen Benutzer betrieben wird, wobei die Client-Rechenvorrichtung eine KVM-Anwendung (21) ausführt, um die KVM-Sitzung auszuführen;
Verwenden der KVM-Anwendung, um das KVM-Gerät zu steuern, um mit einem Zielcomputer (16) zu kommunizieren;
Verwenden des KVM-Geräts, um ein vom Zielcomputer empfangenes Video-Frame an eine Anzeige (26), die operativ mit der Client-Rechenvorrichtung assoziiert ist, zu liefern, wobei das Video-Frame Pixel enthält, die das Video-Frame bilden, wobei die Pixel im Video-Frame mindestens einen Text oder ein alphanumerisches Zeichen bilden;
Empfangen einer Eingabe von einer benutzersteuerbaren Steuerkomponente der Client-Rechenvorrichtung, wobei die Eingabe einen durch den Benutzer ausgewählten Abschnitt des Video-Frames definiert, der den mindestens einen Text oder das mindestens eine alphanumerische Zeichen, der/das in eine Textausgabe umgewandelt werden soll, einschließt;
Verwenden einer Softwareanwendung zur optischen Zeichenerkennung, OCR-Softwareanwendung, (20) zum Umwandeln des mindestens einen Texts oder alphanumerischen Zeichens in die Textausgabe, wobei die Ausführung eines KOPIEREN-Befehls durch den Benutzer die Verwendung der OCR-Softwareanwendung aufruft; und
Verwenden der Client-Rechenvorrichtung zum Kopieren der Textausgabe für eine nachfolgende Verwendung durch den Benutzer.

2. Verfahren nach Anspruch 1, wobei die OCR-Softwareanwendung auf der Client-Rechenvorrichtung ausgeführt wird.

3. Verfahren nach Anspruch 1, wobei das Empfangen einer Eingabe von einer benutzersteuerbaren Steuerkomponente ein Empfangen einer Eingabe von einem benutzergesteuerten Touchpad (30) der Client-Rechenvorrichtung umfasst, wobei das Touchpad dazu ausgelegt ist, dem Benutzer zu ermöglichen, einen Abschnitt des Video-Frames hervorzuheben, in dem der mindestens eine Text oder das mindestens eine alphanumerische Zeichen angezeigt wird.

4. Verfahren nach Anspruch 1, wobei das Empfangen einer Eingabe von einer benutzersteuerbaren Steuerkomponente ein Empfangen einer Eingabe von einer externen Maus (30a) umfasst, die mit der Client-Rechenvorrichtung gekoppelt ist, wobei die externe Maus dazu ausgelegt ist, dem Benutzer zu ermöglichen, einen Abschnitt des Video-Frames hervorzuheben, in dem der mindestens eine Text oder das mindestens eine alphanumerische Zeichen angezeigt wird.

5. Verfahren nach Anspruch 1, wobei die Textausgabe eine ASCII-Textausgabe umfasst.

6. Verfahren nach Anspruch 1, wobei die benutzersteuerbare Steuerkomponente dazu ausgelegt ist, dem Benutzer zu ermöglichen, die Textausgabe nach der Umwandlung durch die OCR-Softwareanwendung in eine Zwischenablage (32) einer Anwendung, die auf der Client-Rechenvorrichtung ausgeführt wird, zu kopieren.

7. Verfahren nach Anspruch 6, wobei das Verwenden der benutzersteuerbaren Steuerkomponente ein Verwenden eines Touchpads (30), das operativ mit der Client-Rechenvorrichtung assoziiert ist, umfasst.

8. Verfahren nach Anspruch 6, wobei das Verwenden der benutzersteuerbaren Steuerkomponente ein Verwenden einer externen Maus (30a), die mit der Client-Rechenvorrichtung verbunden ist, umfasst.

9. Verfahren nach Anspruch 1, wobei das Zugreifen auf ein KVM-Gerät unter Verwendung einer Client-Rechenvorrichtung ein Zugreifen auf das KVM-Gerät unter Verwendung eines umfasst von:
einem Laptop;
einem Desktop-Computer;
einem Rechen-Tablet oder
einem Smartphone.

10. System (10) zum Auswählen eines oder mehrerer Zeichen(s) mindestens eines von einem Text oder alphanumerischen Zeichen, der/die in einem Video-Frame angezeigt wird/werden, das während einer Tastatur-, Video- und Maussitzung, KVM-Sitzung, empfangen wird, wobei das System umfasst:
eine Rechenvorrichtung (24) zum Zugreifen auf ein dezentral angeordnetes KVM-Gerät (12), das zum Ausführen der KVM-Sitzung verwendet wird, und Kommunizieren mit diesem;
eine Anzeige (26), die operativ mit der Rechenvorrichtung assoziiert ist;
einen Speicher (22), der operativ mit der Rechenvorrichtung assoziiert ist, wobei der Speicher ausgelegt ist zum:
Ausführen einer KVM-Anwendung (21), um das Ausführen der KVM-Sitzung zu unterstützen, um die Kommunikation mit einem dezentral angeordneten Zielcomputer (16) in Kommunikation mit dem KVM-Gerät zu ermöglichen; Ausführen eines Programms zur optischen Zeichenerkennung, OCR-Programms, (20), das dazu ausgelegt ist, das mindestens eine von einem Text oder alphanumerischen Zeichen im Video-Frame, das von der KVM-Vorrichtung empfangen wird, zu erkennen;
wobei die Rechenvorrichtung dazu ausgelegt ist, das Video-Frame, das durch den Zielcomputer erzeugt und durch das KVM-Gerät an die Rechenvorrichtung weitergeleitet wird, zu empfangen und auf der Anzeige anzuzeigen, wobei das Video-Frame Pixel enthält, die das Video-Frame bilden, und wobei die Pixel im Video-Frame das mindestens eine von einem Text oder alphanumerischen Zeichen bilden; eine benutzersteuerbare Eingabe, die operativ mit der Rechenvorrichtung assoziiert ist und dazu ausgelegt ist, einem Benutzer zu ermöglichen, einen ausgewählten Abschnitt des Video-Frames, der den mindestens einen Text oder das mindestens eine alphanumerische Zeichen einschließt, zu definieren; und
wobei die Rechenvorrichtung ferner dazu ausgelegt ist, das OCR-Programm zum Umwandeln des mindestens einen Texts oder alphanumerischen Zeichens in die Textausgabe zur weiteren nachfolgenden Verwendung durch den Benutzer zu verwenden, wobei die Ausführung eines KOPIEREN-Befehls durch den Benutzer die Verwendung des OCR-Programms aufruft.

## Revendications

1. Procédé pour sélectionner et copier un ou plusieurs caractères d'au moins un élément parmi un texte ou des informations alphanumériques apparaissant à l'intérieur d'une vue d'image vidéo en cours d'être affichée sur un écran d'affichage (26) d'un dispositif informatique client (24), durant une session clavier, vidéo, et souris, Keyboard, Video, and Mouse KVM, dans laquelle le dispositif informatique client est en cours d'être utilisé, le procédé comprenant :
l'accès à un appareil KVM (12) en utilisant un dispositif informatique client (24) en cours d'être exploité par un utilisateur, dans lequel le dispositif informatique client est en cours d'exploiter une application KVM (21) pour effectuer la session KVM ;
l'utilisation de l'application KVM pour commander l'appareil KVM pour communiquer avec un ordinateur cible (16) ;
l'utilisation de l'appareil KVM pour fournir une vue vidéo, reçue en provenance de l'ordinateur cible, à un écran d'affichage (26) opérationnellement associé au dispositif informatique client, la vue vidéo contenant des pixels composant la vue vidéo, les pixels dans la vue vidéo formant au moins un texte ou caractère alphanumérique ;
la réception d'une entrée en provenance d'un composant de commande commandable par utilisateur du dispositif informatique client, l'entrée définissant une partie de la vue vidéo sélectionnée par l'utilisateur qui inclut l'au moins un texte ou caractère alphanumérique devant être converti en une sortie textuelle ;
l'utilisation d'une application logicielle de reconnaissance optique de caractères, Optical Character Recognition, OCR, (20) pour convertir l'au moins un texte ou caractère alphanumérique en la sortie textuelle, dans lequel l'exécution d'une instruction COPIER par l'utilisateur fait appel à l'utilisation de l'application logicielle OCR ; et
l'utilisation du dispositif informatique client pour copier la sortie textuelle pour l'utilisation subséquente par l'utilisateur.

2. Procédé de la revendication 1, dans lequel l'application logicielle OCR est en cours d'être exploitée sur le dispositif informatique client.

3. Procédé de la revendication 1, dans lequel la réception d'une entrée en provenance d'un composant de commande commandable par utilisateur comprend la réception d'une entrée en provenance d'un clavier commandé par utilisateur (30) du dispositif informatique client, dans lequel le clavier est configuré pour permettre à l'utilisateur de mettre en évidence une partie de la vue vidéo dans laquelle apparaît l'au moins un texte ou caractère alphanumérique.

4. Procédé de la revendication 1, dans lequel la réception d'une entrée en provenance d'un composant de commande commandable par utilisateur comprend la réception d'une entrée en provenance d'une souris externe (30a) couplée au dispositif informatique client, dans lequel la souris externe est configurée pour permettre à l'utilisateur de mettre en évidence une partie de la vue vidéo dans laquelle apparaît l'au moins un texte ou caractère alphanumérique.

5. Procédé de la revendication 1, dans lequel la sortie textuelle comprend une sortie textuelle ASCII.

6. Procédé de la revendication 1, dans lequel le composant de commande commandable par utilisateur est configuré pour permettre à l'utilisateur de copier la sortie textuelle sur un presse-papiers (32) d'une application en cours d'être exploitée sur le dispositif informatique client après la conversion par l'application logicielle OCR.

7. Procédé de la revendication 6, dans lequel l'utilisation du composant de commande commandable par utilisateur comprend l'utilisation d'un clavier (30) opérationnellement associé au dispositif informatique client.

8. Procédé de la revendication 6, dans lequel l'utilisation du composant de commande commandable par utilisateur comprend l'utilisation d'une souris externe (30a) connectée au dispositif informatique client.

9. Procédé de la revendication 1, dans lequel l'accès à un appareil KVM en utilisant un dispositif informatique client comprend l'accès à l'appareil KVM en utilisant un élément parmi :
un ordinateur portatif ;
un ordinateur de bureau ;
une ardoise informatique ; ou
un téléphone multifonction.

10. Système (10) pour sélectionner un ou plusieurs caractères d'au moins un élément parmi un texte ou un caractère alphanumérique apparaissant dans une vue vidéo reçue durant une session clavier, vidéo, et souris, Keyboard, Video, and Mouse KVM, le système comprenant :
un dispositif informatique (24) pour accéder à un appareil KVM situé à distance (12), et communiquer avec celui-ci, utilisé pour effectuer la session KVM ;
un écran d'affichage (26) opérationnellement associé au dispositif informatique ;
une mémoire (22) opérationnellement associée au dispositif informatique, la mémoire étant configurée pour :
exploiter une application KVM (21) pour aider à effectuer la session KVM, pour permettre une communication avec un ordinateur cible situé à distance (16) en communication avec l'appareil KVM ;
exploiter un programme de reconnaissance optique de caractères, Optical Character Recognition OCR, (20) configuré pour reconnaître l'au moins un élément parmi un texte ou un caractère alphanumérique dans la vue vidéo reçue en provenance de l'appareil KVM ;
le dispositif informatique étant configuré pour recevoir et afficher la vue vidéo sur l'écran d'affichage, générée par l'ordinateur cible et passée au dispositif informatique par l'appareil KVM, la vue vidéo contenant des pixels composant la vue vidéo, et les pixels dans la vue vidéo formant l'au moins un texte ou caractère alphanumérique ;
une entrée commandable par utilisateur opérationnellement associée au dispositif informatique et configurée pour permettre à un utilisateur de définir une partie sélectionnée de la vue vidéo qui inclut l'au moins un texte ou caractère alphanumérique ; et
le dispositif informatique étant en outre configuré pour utiliser le programme OCR pour convertir l'au moins un texte ou caractère alphanumérique en la sortie textuelle, pour l'utilisation supplémentaire subséquente par l'utilisateur, dans lequel l'exécution d'une instruction COPIER par l'utilisateur fait appel à l'utilisation du programme OCR.
